# FASCICULE DE BREVET EUROPEEN

(11) **EP 1 249 636 B1**
(45) Date de publication et mention de la délivrance du brevet: **15.12.2004**
(21) Numéro de dépôt: 02290797.6
(22) Date de dépôt: 29.03.2002
(51) Int. Cl.: F16F 13/26, F16F 13/10

(54) **Support antivibratoire hydraulique**
Hydraulisches, schwingungsdämpfendes Lager
Hydraulic antivibration support

(30) Priorité: 02.04.2001 FR 0104452
(43) Date de publication de la demande: 16.10.2002
(73) Titulaire: HUTCHINSON, 75008 Paris (FR)
(72) Inventeur: Gennesseaux, André, 28200 Conie-Molitard (FR)
(74) Mandataire: Burbaud, Eric

(56) Documents cités:
- EP-A- 0 596 767
- EP-A- 0 840 035
- EP-A- 0 852 304
- EP-A- 0 939 243
- EP-A- 0 957 287
- DE-A- 19 902 494
- US-A- 4 836 515
- US-A- 5 667 205

## Description

La présente invention est relative aux supports antivibratoires hydrauliques, destinés notamment au montage des moteurs de véhicules automobiles sur le châssis de ces véhicules.

Plus particulièrement, l'invention concerne un support antivibratoire hydraulique destiné à relier entre eux des premier et deuxième éléments rigides pour amortir des vibrations entre ces éléments, ce support comportant :
- des première et deuxième armatures rigides destinées à être fixées respectivement aux premier et deuxième éléments rigides,
- un corps en élastomère reliant entre elles les première et deuxième armatures,
- une chambre de travail hydraulique remplie de liquide, au moins partiellement délimitée par le corps en élastomère,
- un soufflet souple en élastomère délimitant au moins partiellement une chambre de compensation hydraulique remplie de liquide qui communique avec ladite chambre de travail par un passage étranglé, ledit soufflet présentant une partie centrale solidarisée à un organe porté par la deuxième armature et une périphérie solidarisée à ladite deuxième armature, et ledit soufflet présentant un pli de forme générale annulaire qui est centré sur un axe central et qui fait saillie dans la chambre de compensation autour de ladite partie centrale du soufflet, sur une certaine hauteur jusqu'à un sommet de forme générale annulaire.

Le document EP-A-0 939 243 décrit un exemple d'un tel support antivibratoire.

Dans les supports antivibratoires connus de ce type, le pli de forme générale annulaire formé par le soufflet, présente l'avantage de permettre d'augmenter les possibilités de variations de volume de la chambre de compensation.

Les supports antivibratoires de ce type ont toutefois l'inconvénient de présenter une raideur relativement grande du soufflet, ce qui peut dans certains cas contrarier la libre déformation de la chambre de compensation et gêner le fonctionnement du support antivibratoire.

La présente invention a notamment pour but de pallier cet inconvénient.

A cet effet, selon l'invention, un support antivibratoire du genre en question est caractérisé en ce que le pli présente une forme dépourvue de symétrie de révolution autour de l'axe central, et en ce que le pli présente localement au moins une dépression ayant une concavité tournée vers la chambre de compensation.

Grâce à ces dispositions, on évite que le pli ne rigidifie le soufflet par effet de voûte lorsque le volume de la chambre de travail augmente. On diminue ainsi nettement la raideur du soufflet, et on améliore le fonctionnement du support antivibratoire.

Dans des modes de réalisation préférés du procédé selon l'invention, on peut éventuellement avoir recours en outre à l'une et/ou à l'autre des dispositions suivantes :
- ladite dépression s'étend sur sensiblement toute la hauteur du pli ;
- le pli du soufflet s'étend angulairement sur un arc de cercle entre deux extrémités séparées l'une de l'autre par ladite dépression, formant une zone non plissée du soufflet ;
- ladite dépression est localisée au niveau du sommet du pli ;
- ladite dépression présente une forme venue de moulage avec le soufflet ;
- le support antivibratoire comporte au moins un élément d'appui rigide solidaire de la deuxième armature et appuyant localement sur le pli en formant ladite dépression ;
- le soufflet présente, au niveau du sommet du pli, une forme irrégulière formant une succession de parties en saillie vers la chambre de compensation et de dépressions présentant chacune une concavité ouverte vers chambre de compensation ;
- la chambre de travail et la chambre de compensation sont séparées l'une de l'autre par une cloison rigide qui comporte un ajutage central faisant communiquer la chambre de travail avec un organe excitateur monté mobile perpendiculairement à la cloison rigide et commandé par un dispositif de commande ;
- l'organe excitateur est une membrane souple comportant une première face qui communique avec la chambre de travail par l'intermédiaire dudit ajutage central et une deuxième face qui communique avec une chambre pneumatique comportant un raccord adapté pour être relié à une source pneumatique extérieure ;
- le support antivibratoire comporte un couvercle qui présente un fond et une paroi périphérique solidarisée avec la deuxième armature en délimitant avec celle-ci un espace intérieur creux, cet espace intérieur contenant une couronne qui relie de façon étanche le couvercle à la cloison rigide autour dudit ajutage central, la chambre pneumatique étant délimitée entre la membrane souple et le fond du couvercle, la partie centrale du soufflet étant solidaire de ladite couronne, la chambre de compensation étant disposée autour de ladite couronne au voisinage de la cloison rigide, et une chambre hydraulique intermédiaire, qui communique avec ledit ajutage central, étant délimitée entre la membrane souple et ladite couronne rigide.

D'autres caractéristiques et avantages de l'invention apparaîtront au cours de la description suivante de quatre de ses formes de réalisation, données à titre d'exemples non limitatifs, en regard des dessins joints.

Sur les dessins :
- la figure 1 est une vue schématique d'un véhicule automobile pouvant être équipé d'un support antivibratoire selon l'invention,
- la figure 2 est une vue en coupe verticale d'un support antivibratoire selon une première forme de réalisation de l'invention,
- la figure 3 est une vue schématique en perspective d'un soufflet en élastomère appartenant au support antivibratoire de la figure 1 ;
- la figure 4 est une vue de dessus du soufflet de la figure 3,
- la figure 5 est une vue en coupe développée selon la ligne L de la figure 4,
- la figure 6 est une vue similaire à la figure 2, pour une deuxième forme de réalisation de l'invention,
- la figure 7 est une vue similaire à la figure 5, dans la deuxième forme de réalisation de l'invention,
- la figure 8 est une demi-vue de dessus du soufflet du support de la figure 6,
- la figure 9 est une vue similaire à la figure 6, pour une troisième forme de réalisation de l'invention,
- et la figure 10 est une vue similaire à la figure 5, pour une quatrième forme de réalisation de l'invention.

Sur les différentes figures, les mêmes références désignent des éléments identiques ou similaires.

Dans la description qui suit, les termes tels que "haut, bas, inférieur, supérieur, horizontal, vertical" sont utilisés dans le seul but d'améliorer la clarté de la description, en se référant à la position d'utilisation la plus habituelle du dispositif selon l'invention, mais ces termes ne sont pas limitatifs.

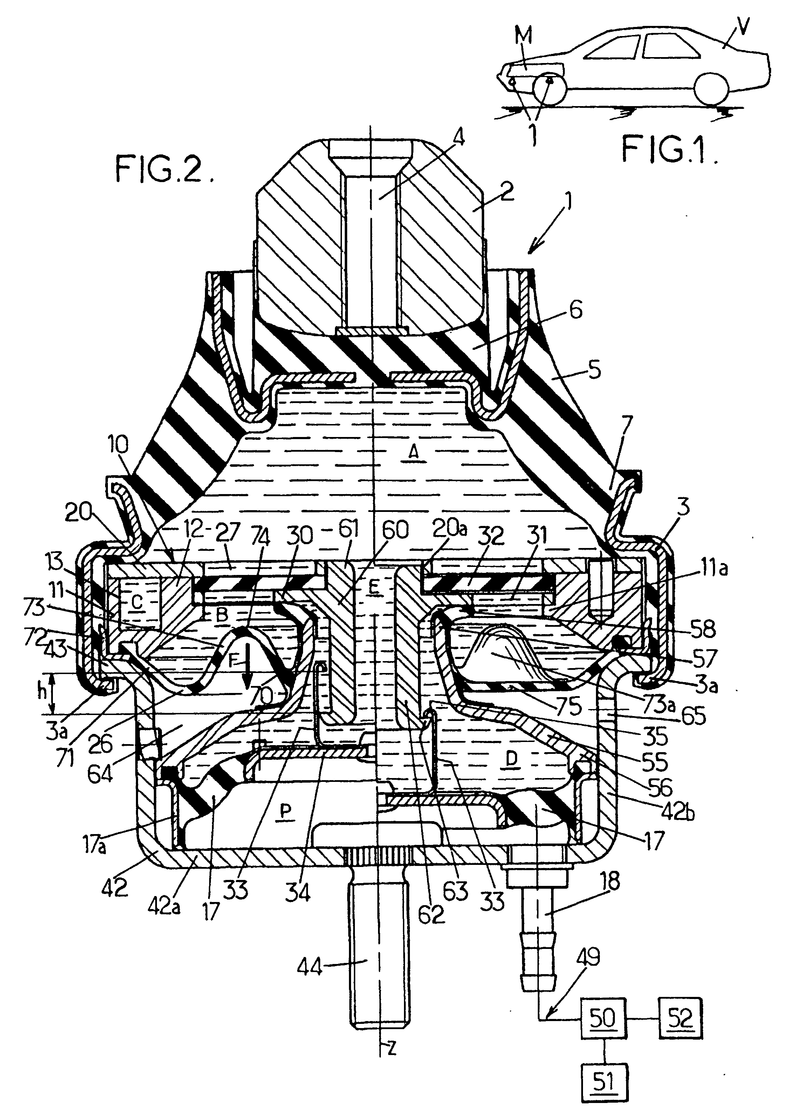

La figure 1 représente très scnematiquement un véhicule automobile dont le moteur à combustion interne M est supporté sur la caisse V par l'intermédiaire de supports antivibratoires hydrauliques 1.

Selon une première forme de réalisation de l'invention, représentée sur la figure 2, le support antivibratoire hydraulique 1 comporte des première et deuxième armatures 2,3 qui sont destinées à être fixées respectivement au bloc motopropulseur M et à la caisse V.

Dans l'exemple considéré, la première armature 2 se présente sous la forme d'un plot qui est centré sur un axe vertical Z et qui est percé d'un trou fileté 4 permettant sa fixation au bloc motopropulseur M, tandis que la deuxième armature 3 est formée par une couronne d'acier également centrée sur l'axe Z.

Ces deux armatures 2,3 sont reliées entre elles par un corps en élastomère 5 relativement épais, qui présente une résistance à la compression suffisante pour reprendre les efforts statiques dus au poids du bloc motopropulseur. Ce corps en élastomère 5 présente une paroi latérale en forme de cloche qui s'étend entre un sommet 6 solidaire du plot 2, et une base annulaire 7 qui est solidaire de la couronne 3.

La deuxième armature 3 entoure une cloison rigide 10 qui délimite avec le corps en élastomère 5 une chambre de travail A remplie de liquide.

Dans l'exemple considéré ici, cette cloison 10 comporte un corps 11 moulé en alliage léger qui forme lui-même une couronne 12 centrée sur l'axe Z et dans laquelle est évidée une gorge 13 ouverte vers le haut qui s'étend angulairement sur une partie de la périphérie de la couronne 12.

Par ailleurs, la cloison rigide 10 comporte en outre un couvercle 20 en tôle d'acier ou similaire, qui recouvre ledit corps 11 en direction de la chambre de travail A.

Le couvercle 20 obture la partie supérieure de la gorge 13 ménagée dans le corps de la cloison rigide, de façon à délimiter avec cette gorge un passage étranglé C rempli de liquide, qui s'étend entre deux extrémités débouchant respectivement dans la chambre de travail A et dans une chambre de compensation B.

Par ailleurs, le couvercle 20 comporte en outre, radialement vers l'intérieur du passage étranglé C, une grille annulaire 27 formée par une série de trous répartis angulairement autour de l'axe Z.

Le couvercle 20 est percé d'un trou central 20a dans lequel est monté coulissant un tube rigide 60, réalisé par exemple en alliage léger ou en matière plastique. Ce tube coulissant est représenté en position haute sur la partie gauche de la figure 2 et en position basse sur la partie droite de la figure 2.

Le tube 60 délimite intérieurement un ajutage central E qui communique avec la chambre de travail A, et il s'étend selon l'axe Z entre une extrémité supérieure 61 et une extrémité inférieure 62.

L'extrémité inférieure 62 est pourvue d'un rebord extérieur annulaire 63, tandis qu'une grille 30, solidaire du tube 60, s'étend radialement vers l'extérieur à partir de ce tube au voisinage de l'extrémité supérieure 61.

La grille 30, qui est percée d'orifices 31, est montée mobile parallèlement à l'axe Z dans un logement délimité entre, d'une part, la grille 27, et d'autre part, un épaulement intérieur 11a du corps 11 susmentionné.

De plus, un clapet annulaire en élastomère 32 est emprisonné entre les grilles 30 et 27, ce clapet 32 s'étendant radialement par rapport à l'axe Z.

Par ailleurs, sous le corps 11 de la cloison 10 est disposé un couvercle 42 qui comporte :
- un fond 42a sensiblement perpendiculaire à l'axe Z,
- une paroi latérale annulaire 42b qui s'étend jusqu'au corps 11 parallèlement à l'axe Z,
- et un rebord annulaire extérieur 43 qui s'étend sensiblement radialement par rapport à l'axe Z.

Le fond 42a du couvercle 42 est solidaire d'un goujon 44 ou autre moyen de fixation permettant de fixer ledit fond au châssis du véhicule.

De plus, une chambre pneumatique P est délimitée entre le fond 42a du couvercle 42 et une membrane souple 17 en élastomère. Cette membrane 17 peut par exemple être pourvue à sa périphérie extérieure d'une couronne de renfort rigide 17a emboîtée à force dans le couvercle 42.

Dans l'exemple représenté, la partie centrale de la membrane 17 comporte une plaque centrale de renfort 34 rigide, solidarisée avec des pattes 33 réalisées par exemple en métal ou en matière plastique, lesquelles pattes 33 s'étendent axialement selon l'axe Z jusqu'à des extrémités libres formant des crochets intérieurs 35. Les pattes 33 sont engagées autour du rebord extérieur 63 du tube 60, et les crochets 35 sont disposés à une hauteur h au-dessus dudit rebord 64 dans la position de repos dans la membrane 17.

La chambre pneumatique P est reliée par un raccord 18 à un circuit pneumatique extérieur 49 qui est adapté pour communiquer soit avec le circuit d'admission d'air 52 du moteur, soit avec l'atmosphère. La mise en communication du circuit 49 avec le circuit d'admission 52 ou avec l'atmosphère est réalisée par l'intermédiaire d'une électrovanne 50 à trois voies commandées par un circuit de contrôle 51 tel que le calculateur de bord du véhicule, ou autre.

Par ailleurs, une couronne rigide 55, réalisée par exemple en alliage léger ou en matière plastique, est disposée dans l'espace intérieur délimité entre le couvercle 42 et la cloison 10.

Cette couronne 55, qui peut être réalisée par exemple en alliage léger ou en matière plastique, présente un bord annulaire inférieur 56 qui peut notamment être emboîté à force dans la paroi latérale 42b du couvercle, et un bord annulaire supérieur 57 de plus petit diamètre qui est disposé au voisinage de la cloison rigide 10.

Le bord annulaire supérieur 57 de la couronne 55 présente une lèvre compressible 58 en élastomère, disposée en appui étanche contre une partie annulaire intérieure pleine de la grille 30.

Par ailleurs, le support antivibratoire comporte également un soufflet annulaire 26 en élastomère, centré sur l'axe Z.

La périphérie intérieure 70 de ce soufflet en élastomère est surmoulée et adhérisée sur la couronne 55, le soufflet 26 formant de préférence une seule pièce avec la lèvre compressible 58 susmentionnée.

De plus, la périphérie extérieure 71 du soufflet, qui peut être renforcée notamment par une couronne rigide 72 métallique ou autre, est serrée axialement contre le corps 11 de la cloison 10 par le rebord extérieur 43 du couvercle, lequel rebord 43 est lui-même pressé contre la périphérie extérieure du soufflet par sertissage de pattes inférieures 3a appartenant à la deuxième armature 3.

Le soufflet 26 en élastomère délimite la chambre de compensation B susmentionnée avec la cloison 10 et la couronne 55, qui communique avec le clapet 32 par l'intermédiaire des ouvertures 31 de la grille.

Par ailleurs, une chambre intermédiaire D, qui communique avec l'ajutage central E, est délimitée entre la couronne 55 et la membrane 17, tandis qu'un espace intermédiaire 64, communiquant avec l'atmosphère par l'intermédiaire d'un orifice 65 de la paroi latérale du couvercle 42, est laissé libre au-dessous du soufflet 26.

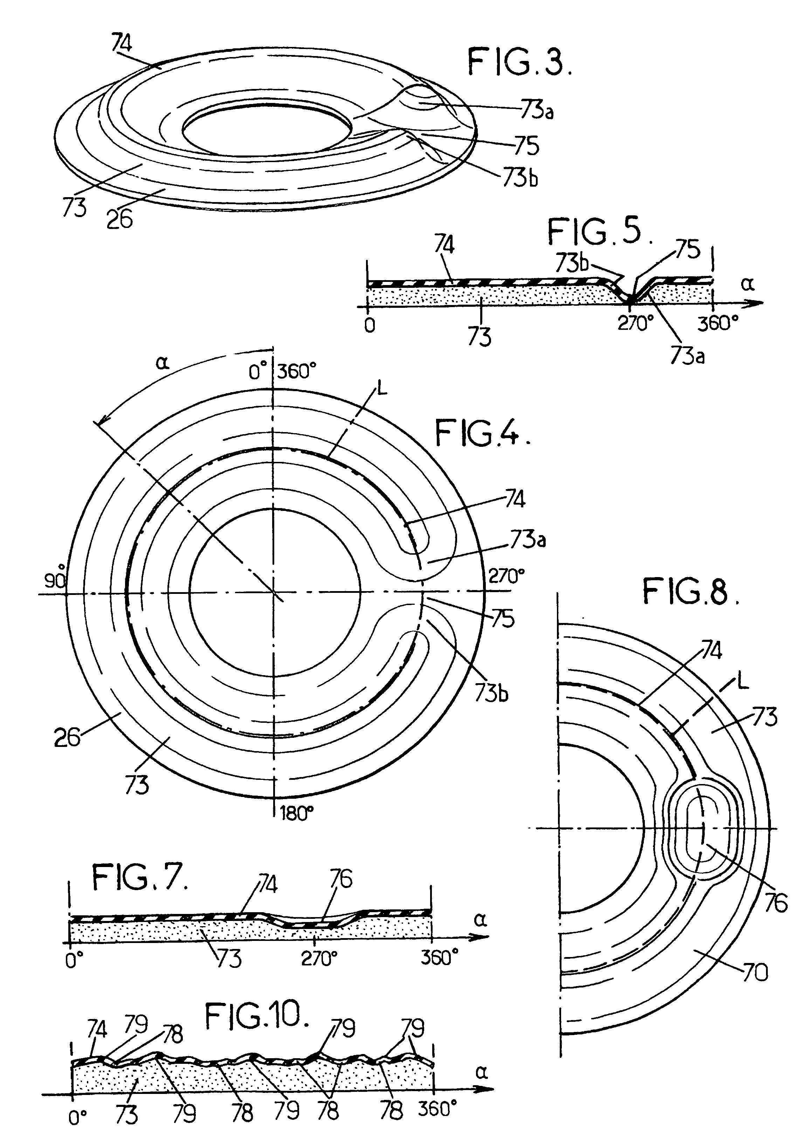

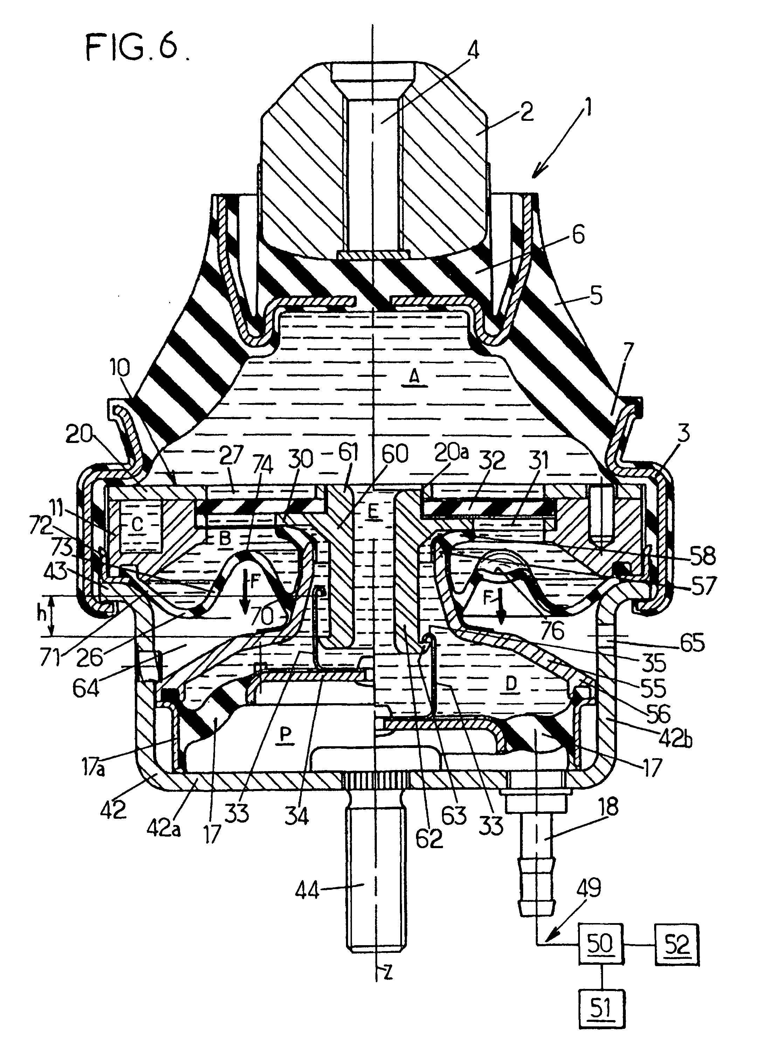

Comme représenté plus en détail sur les figures 3 à 5, le soufflet 26 forme un pli 73, de forme générale annulaire, qui fait saillie dans la chambre de compensation B, jusqu'à un sommet 74 de forme également annulaire centrée sur l'axe Z. Pour faciliter les déformations de ce pli dans le sens de la flèche F visible sur la figure 2, le pli 73 présente une forme dépourvue de symétrie de révolution autour de l'axe central Z, et plus particulièrement, le pli 73 présente localement une dépression 75 ayant une concavité tournée vers la chambre de compensation B.

Dans l'exemple considéré, la dépression 75 s'étend sur sensiblement toute la hauteur du pli 73, de sorte que le pli 73 du soufflet s'étend angulairement sur un arc de cercle entre deux extrémités 73a, 73b séparées l'une de l'autre par une zone non plissée du soufflet 26 formée par ladite dépression 75.

Grâce à la présence de la dépression 75, le soufflet 26 présente une très faible raideur et n'offre quasiment aucune résistance vis-à-vis des transferts de liquide intervenant entre la chambre de travail A et la chambre de compensation B, ce qui améliore le fonctionnement du support antivibratoire.

Le support antivibratoire qui vient d'être décrit fonctionne comme suit.

Lorsque le véhicule dans lequel est installé le support antivibratoire ne fonctionne pas, ce support reste dans la position de repos représentée sur la partie gauche de la figure 2.

Lorsque le moteur du véhicule est démarré et fonctionne au ralenti, en générant ainsi au niveau du plot 2 des mouvements vibratoires qui présentent généralement une fréquence comprise entre 20 et 80 Hz, voire entre 10 et 90 Hz, la chambre pneumatique P est alternativement mise en dépression et à la pression atmosphérique, par l'électrovanne 50 commandée par le calculateur 51. Il en résulte des mouvements vibratoires de la membrane flexible 17, et ces mouvements vibratoires émettent dans la chambre intermédiaire D des contre-vibrations visant à neutraliser les effets des vibrations du moteur.

Ces contre-vibrations sont optimisées par le calculateur 51 selon un programme prédéterminé, en fonction du régime du moteur et de divers paramètres pouvant influer sur les vibrations de ralenti (fonctionnement de la climatisation, consommation d'électricité, température du moteur, etc.) en agissant par exemple sur les paramètres suivants :
- l'amplitude des vibrations de la membrane 17 qui est contrôlée en agissant sur le rapport cyclique du signal envoyé à l'électrovanne 50 (rapport entre le temps pendant lequel l'électrovanne 50 met la chambre pneumatique P en dépression et la durée totale d'une période de vibrations),
- la phase des vibrations de la membrane 17, contrôlée en agissant sur l'instant initial de chaque cycle d'actionnement de l'électrovanne 50 par rapport à la rotation du moteur, laquelle rotation est repérée par exemple par le passage d'un cylindre donné à son point mort haut.

Les contre-vibrations ainsi émises par la membrane 17 dans la chambre intermédiaire D sont transmises à la chambre de travail A par l'intermédiaire de l'ajutage E, qui peut avantageusement être dimensionné de façon à présenter une fréquence de résonance située par exemple dans la plage allant de 10 à 90 Hz, et correspondant sensiblement à la fréquence du ralenti.

Lorsque le moteur fonctionne au ralenti, l'amplitude des vibrations auxquelles est soumise la membrane 17 est telle que la membrane se déplace d'une hauteur inférieure à la hauteur h susmentionnée par rapport à sa position de repos, au moins la majeure partie du temps, de sorte que le clapet 32 reste bloqué sous la poussée de la lèvre 58 et ne gêne pas l'effet desdites contre-vibrations.

Au contraire, lorsque le véhicule roule, l'électrovanne 50 est actionnée de façon à mettre la chambre pneumatique P en dépression permanente, comme représenté sur la partie droite de la figure 2. Il en résulte que la membrane souple 17 se plaque sensiblement contre la paroi de fond 16. Dans cette position de butée, les crochets 35 des doigts d'accrochage 33 entraînent le tube 60 et la grille 30 vers le bas en écrasant la lèvre 58, ce qui donne un faible jeu vertical au clapet 32, ce jeu étant typiquement de l'ordre de 0,5 à 1 mm.

Ainsi, pendant le roulage du véhicule, le clapet 32 assure un découplage axial entre les armatures 2 et 3 vis-à-vis des vibrations de haute fréquence et de faible amplitude (par exemple, fréquence supérieure à 20 Hz ou à 50 Hz et amplitude inférieure à 1 mm), tandis que le passage étranglé C est dimensionné pour représenter une fréquence de résonance généralement inférieure à 20 Hz, de façon à amortir les mouvements de hachis, de relativement faible fréquence (par exemple, inférieure à 20 Hz) et de relativement grande amplitude (par exemple, supérieure à 1 mm) générés par le roulage du véhicule.

Par ailleurs, dans la deuxième forme de réalisation de l'invention, représentée sur les figures 6 à 8, le sommet 74 du pli annulaire 73 du soufflet est comme précédemment pourvu d'une dépression 76 de concavité tournée vers la chambre de compensation B, mais cette dépression s'étend uniquement sur une partie de la hauteur du pli.

Dans ce deuxième mode de réalisation, tout comme dans le premier mode de réalisation décrit ci-dessus, la dépression ménagée dans le pli 73 du soufflet est venue de moulage avec le soufflet 26.

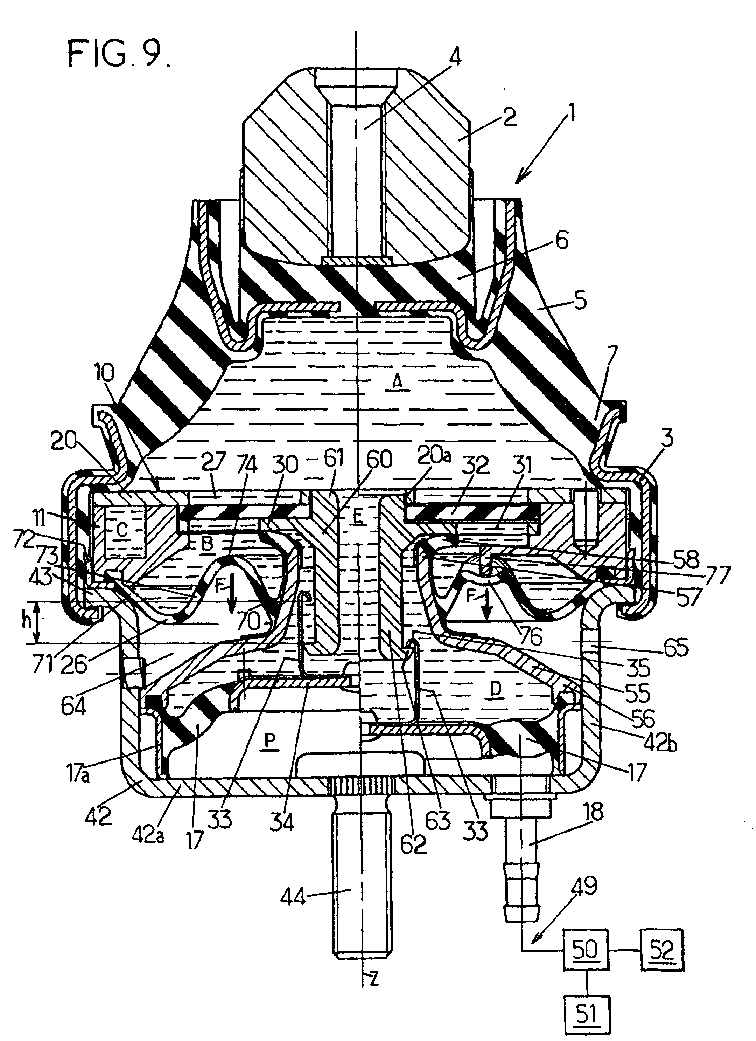

Selon un troisième mode de réalisation, représenté sur la figure 9, la dépression 76, présentant par exemple une forme identique ou similaire à la dépression 76 du deuxième mode de réalisation décrit ci-dessus, pourrait être obtenue au moyen d'un doigt rigide 77 ou autre élément d'appui, appartenant par exemple au corps 11 de la cloison 10 et faisant saillie axialement vers le bas dans la chambre de compensation B en appuyant localement sur le sommet 74 du pli 73.

Dans ce cas, le soufflet 26 peut être moulé avec un pli annulaire 73 symétrique de révolution autour de l'axe Z, la dépression locale 76 étant alors obtenue lors du montage du support antivibratoire.

Enfin, comme représenté sur la figure 10, dans une quatrième forme de réalisation de l'invention, le soufflet 26 peut présenter, au niveau du sommet 74 de son pli 73, une forme irrégulière formant une succession de dépressions 78 présentant chacune une concavité ouverte vers la chambre de compensation B et de parties 79 en saillie vers la chambre de compensation B. Cette forme irrégulière peut notamment être obtenue lors du moulage du soufflet 26.

## Revendications

1. Support antivibratoire hydraulique destiné à relier entre eux des premier et deuxième éléments rigides pour amortir des vibrations entre ces éléments, ce support comportant :
- des première et deuxième armatures rigides (2,3) destinées à être fixées respectivement aux premier et deuxième éléments rigides,
- un corps en élastomère (5) reliant entre elles les première et deuxième armatures (2,3),
- une chambre de travail hydraulique (A) remplie de liquide, au moins partiellement délimitée par le corps en élastomère (5),
- un soufflet souple (26) en élastomère délimitant au moins partiellement une chambre de compensation hydraulique (B) remplie de liquide qui communique avec ladite chambre de travail (A) par un passage étranglé (C), ledit soufflet présentant une partie centrale (70) solidarisée à un organe (56) porté par la deuxième armature (3) et une périphérie (71) solidarisée à ladite deuxième armature (3), et ledit soufflet présentant un pli (73) de forme générale annulaire qui est centré sur un axe central (Z) et qui fait saillie dans la chambre de compensation (B) autour de ladite partie centrale (70) du soufflet, sur une certaine hauteur jusqu'à un sommet (74) de forme générale annulaire,
**caractérisé en ce que** le pli (73) présente une forme dépourvue de symétrie de révolution autour de l'axe central (Z), **et en ce que** le pli (73) présente localement au moins une dépression (75,76,78) ayant une concavité tournée vers la chambre de compensation (B).

2. Support antivibratoire selon la revendication 1, dans lequel ladite dépression (75) s'étend sur sensiblement toute la hauteur du pli (73).

3. Support antivibratoire selon la revendication 2, dans lequel le pli (73) du soufflet s'étend angulairement sur un arc de cercle entre deux extrémités (73a,73b) séparées l'une de l'autre par ladite dépression (75), formant une zone non plissée du soufflet.

4. Support antivibratoire selon la revendication 1, dans lequel ladite dépression (76) est localisée au niveau du sommet (74) du pli.

5. Support antivibratoire selon l'une quelconque des revendications précédente, dans lequel ladite dépression (75,76,78) présente une forme venue de moulage avec le soufflet.

6. Support antivibratoire selon la revendication 4, comportant au moins un élément d'appui rigide (77) solidaire de la deuxième armature et appuyant localement sur le pli (73) en formant ladite dépression (76).

7. Support antivibratoire selon la revendication 1, dans lequel le soufflet présente, au niveau du sommet (74) du pli, une forme irrégulière formant une succession de parties en saillie (79) vers la chambre de compensation (B) et de dépressions (78) présentant chacune une concavité ouverte vers chambre de compensation (B).

8. Support antivibratoire selon l'une quelconque des revendications précédentes, dans lequel la chambre de travail (A) et la chambre de compensation (B) sont séparées l'une de l'autre par une cloison rigide (10) qui comporte un ajutage central (E) faisant communiquer ladite chambre de travail avec un organe excitateur (17) monté mobile perpendiculairement à la cloison rigide (10) et commandé par un dispositif de commande (P).

9. Support antivibratoire selon la revendication 8, dans lequel l'organe excitateur (17) est une membrane souple comportant une première face qui communique avec la chambre de travail (A) par l'intermédiaire dudit ajutage central (E) et une deuxième face qui communique avec une chambre pneumatique (P) comportant un raccord (18) adapté pour être relié à une source pneumatique extérieure.

10. Support antivibratoire selon la revendication 9, comportant un couvercle (42) qui présente un fond (42a) et une paroi périphérique (42b) solidarisée avec la deuxième armature (3) en délimitant avec celle-ci un espace intérieur creux, cet espace intérieur contenant une couronne (56) qui relie de façon étanche le couvercle (42) à la cloison rigide (10) autour dudit ajutage central (E), la chambre pneumatique (P) étant délimitée entre la membrane souple (17) et le fond (42a) du couvercle, la partie centrale (70) du soufflet étant solidaire de ladite couronne (56), la chambre de compensation (B) étant disposée autour de ladite couronne (56) au voisinage de la cloison rigide (10), et une chambre hydraulique intermédiaire (D), qui communique avec ledit ajutage central, étant délimitée entre la membrane souple (17) et ladite couronne rigide.

## Claims

1. A hydraulic antivibration support for interconnecting first and second rigid elements to damp vibration between said elements, the support comprising:
- first and second rigid strength members (2, 3) for fixing respectively to the first and second rigid elements;
- an elastomer body (5) interconnecting the first and second strength members (2, 3);
- a hydraulic working chamber (A) filled with liquid, and defined at least in part by the elastomer body (5); and
- a flexible bellows (26) of elastomer material defining at least part of a hydraulic compensation chamber (B) filled with liquid which communicates with said working chamber (A) via a constricted passage (C), said bellows presenting a central portion (70) secured to a member (56) carried by the second strength member (3) and a periphery (71) secured to said second strength member (3), and said bellows presenting a fold (73) of generally annular shape centered on the central axis (Z) and projecting into the compensation chamber (B) around said central portion (70) of the bellows over a certain height up to a ridge (74) of generally annular shape,
the support being **characterized in that** the fold (73) presents a shape that is not circularly symmetrical about the central axis (Z), and **in that** the fold (73) presents locally at least one depression (75, 76, 78) having a concave side facing towards the compensation chamber (B).

2. An antivibration support according to claim 1, in which said depression (75) extends over substantially the full height of the fold (73).

3. An antivibration support according to claim 2, in which the fold (73) of the bellows extends angularly over a circular arc between two ends (73a, 73b) which are separated from each other by said depression (75) that forms a non-folded zone of the bellows.

4. An antivibration support according to claim 1, in which said depression (76) is located in the ridge (74) of the fold.

5. An antivibration support according to any preceding claim, in which said depression (75, 76, 78) is of a shape integrally molded with the bellows.

6. An antivibration support according to claim 4, including at least one rigid bearing element (77) secured to the second strength member and bearing locally on the fold (73) so as to form said depression (76).

7. An antivibration support according to claim 1, in which the bellows presents, in the ridge (74) of the fold, a shape that is irregular, forming a succession of portions (79) projecting towards the compensation chamber (B) and of depressions (78) each having a concave side that is open towards the compensation chamber (B).

8. An antivibration support according to any preceding claim, in which the working chamber (A) and the compensation chamber (B) are separated from each other by a rigid partition (10) having a central bore (E) putting said working chamber into communication with an exciter member (17) mounted to move perpendicularly to the rigid partition (10) and controlled by a control device (P).

9. An antivibration support according to claim 8, in which the exciter member (17) is a flexible diaphragm having a first face which communicates with the working chamber (A) via said central bore (E), and a second face which communicates with a pneumatic chamber (P) having a coupling (18) suitable for being connected to an external pneumatic source.

10. An antivibration support according to claim 9, including a cover (42) presenting an end wall (42a) and a peripheral wall (42b) secured to the second strength member (3) and co-operating therewith to define a hollow inside space, said inside space containing a ring (56) which connects the cover (42) in sealed manner to the rigid partition (10) around said central bore (E), the pneumatic chamber (P) being defined between the flexible diaphragm (17) and the end wall (42a) of the cover, the central portion (70) of the bellows being secured to said ring (56), the compensation chamber (B) being placed around said ring (56) in the vicinity of the rigid partition (10), and an intermediate hydraulic chamber (D) which communicates with said central bore being defined between the flexible diaphragm (17) and said rigid ring.

## Patentansprüche

1. Hydraulisches schwingungsdämpfendes Lager zum Verbinden eines ersten und eines zweiten starren Elements miteinander, um Schwingungen zwischen diesen Elementen zu dämpfen, wobei das Lager folgendes aufweist:
- eine erste und eine zweite starre Bewehrung (2, 3), die an dem ersten bzw. dem zweiten starren Element anbringbar sind,
- einen Elastomerkörper (5), der die erste (2) und die zweite Bewehrung (3) miteinander verbindet,
- eine hydraulische Arbeitskammer (A), die mit Flüssigkeit gefüllt ist und zumindest teilweise mittels des Elastomerkörpers (5) begrenzt ist,
- einen weichen Faltenbalg (26) aus Elastomer, der zumindest teilweise eine mit Flüssigkeit gefüllte hydraulische Kompensationskammer (B) begrenzt, die mit der besagten Arbeitskammer (A) über einen schmalen Kanal (C) kommuniziert, wobei dieser Faltenbalg einen mittleren Bereich (70) hat, der mit einem Organ (56) verbunden ist, das von der zweiten Bewehrung (3) getragen wird, sowie einen Umfangsbereich (71), der mit der zweiten Bewehrung (3) verbunden ist, und wobei der Faltenbalg eine Falte (73) mit einer im allgemeinen ringförmigen Gestalt hat, die an einer Mittelachse (Z) zentriert ist und in der Kompensationskammer (B) um den besagten mittleren Bereich (70) des Faltenbalgs herum hervorsteht, und zwar um eine gewisse Höhe bis hin zu einem Scheitel (74) mit einer im allgemeinen ringförmigen Gestalt,
**dadurch gekennzeichnet, dass** die Falte (73) eine entleerte Gestalt rotationssymmetrisch um die Mittelachse (Z) herum hat, und dass die Falte (73) lokal zumindest eine Vertiefung (75, 76, 78) aufweist, die eine in Richtung der Kompensationskammer (B) gewandte Konkavität hat.

2. Schwingungsdämpfendes Lager nach Anspruch 1, in welchem die besagte Vertiefung (75) sich im Wesentlichen über die gesamte Höhe der Falte (73) erstreckt.

3. Schwingungsdämpfendes Lager nach Anspruch 2, in welchem die Falte (73) des Faltenbalgs sich winklig auf einem Kreisbogen zwischen zwei Enden (73a, 73b) erstreckt, die voneinander durch die Vertiefung (75) getrennt sind, und so eine nicht gefaltete Zone des Faltenbalgs bildet.

4. Schwingungsdämpfendes Lager nach Anspruch 1, in welchem die besagte Vertiefung (76) auf der Höhe des Scheitels (74) der Falte vorhanden ist.

5. Schwingungsdämpfendes Lager nach einem der vorangehenden Ansprüche, in welchem die besagte Vertiefung (75, 76, 78) eine mit dem Faltenbalg zusammen ausgeformte Gestalt hat.

6. Schwingungsdämpfendes Lager nach Anspruch 4, mit zumindest einem starren Anschlagelement (77), das mit der zweiten Bewehrung verbunden ist und lokal gegen die Falte (73) anstößt und dabei die besagte Vertiefung (76) bildet.

7. Schwingungsdämpfendes Lager nach Anspruch 1, in welchem der Faltenbalg auf der Höhe des Scheitels (74) der Falte eine unregelmäßige Gestalt hat, die eine Folge von Vorsprüngen (79) in Richtung der Kompensationskammer (B) und von Vertiefungen (78) bildet, die jeweils eine Konkavität haben, die in Richtung der Kompensationskammer (B) offen ist.

8. Schwingungsdämpfendes Lager nach einem der vorangehenden Ansprüche, in welchem die Arbeitskammer (A) sowie die Kompensationskammer (B) voneinander durch eine starre Zwischenwand (10) getrennt sind, die einen mittleren Durchgang (E) aufweist, der die Arbeitskammer mit einem Erregerorgan (17) kommunizieren lässt, das beweglich rechtwinklig zu der starren Zwischenwand (10) angebracht ist und mittels einer Steuerungseinrichtung (P) angesteuert ist.

9. Schwingungsdämpfendes Lager nach Anspruch 8, bei welchem das Erregerorgan (17) eine weiche Membran mit einer ersten Fläche ist, die mit der Arbeitskammer (A) über den mittleren Durchgang (E) kommuniziert, und einer zweiten Fläche, die mit einer pneumatischen Kammer (E) kommuniziert, welche ein Verbindungsstück (18) aufweist, das an eine externe pneumatische Quelle anschließbar ist.

10. Schwingungsdämpfendes Lager nach Anspruch 9, mit einem Deckel (42), der einen Boden (42a) sowie eine Umfangswand (42b) aufweist, welche mit der zweiten Bewehrung (3) verbunden ist und dabei mit dieser zusammen einen hohlen inneren Raum begrenzt, der eine Krone (56) aufweist, die auf dichte Art und Weise den Deckel (42) mit der starren Zwischenwand (10) um den besagten mittleren Durchgang (E) herum verbindet, wobei die pneumatische Kammer (P) zwischen der weichen Membran (17) und dem Boden (42a) des Deckels begrenzt ist, der mittlere Bereich (70) des Faltenbalgs mit der Krone (56) verbunden ist, die Kompensationskammer (B) um die besagte Krone (56) in der Nähe der starren Zwischenwand (10) herum vorgesehen ist, und eine hydraulische Zwischenkammer (D), die mit dem besagten mittleren Durchgang kommuniziert, zwischen der weichen Membran (17) und der besagten starren Krone begrenzt ist.
